# FASCICULE DE BREVET EUROPEEN

(11) **EP 3 164 900 B1**
(45) Date de publication et mention de la délivrance du brevet: **21.12.2022**
(21) Numéro de dépôt: 15745532.0
(22) Date de dépôt: 01.07.2015
(51) Int. Cl.: H01M 4/04, H01M 10/0525, H01M 10/0562, H01M 10/0585, H01M 6/40, C01B 25/45

(54) **BATTERIE ENTIEREMENT SOLIDE COMPRENANT UN ELECTROLYTE SOLIDE A BASE DE PHOSPHATE LITHIE, STABLE AU CONTACT DE L'ANODE**
FESTKÖRPERBATTERIE MIT EINEM LITHIUMPHOSPHATFESTELEKTROLYTEN, DAS BEI KONTAKT MIT EINER ANODE STABIL IST
ALL-SOLID BATTERY INCLUDING A LITHIUM PHOSPHATE SOLID ELECTROLYTE WHICH IS STABLE WHEN IN CONTACT WITH THE ANODE

(30) Priorité: 01.07.2014 FR 1456250
(43) Date de publication de la demande: 10.05.2017
(73) Titulaire: I-TEN, 69570 Dardilly (FR)
(72) Inventeur: GABEN, Fabien, 69570 Dardilly (FR)
(74) Mandataire: Schmidt, Martin Peter
(86) Numéro de dépôt international: PCT/FR2015/051801
(87) Numéro de publication internationale: WO 2016/001579

(56) Documents cités:
- EP-A1- 1 926 164
- FR-A1- 2 982 083
- US-A1- 2009 162 755
- US-A1- 2014 057 162
- AMATUCCI G G ET AL: "Lithium scandium phosphate-based electrolytes for solid state lithium rechargeable microbatteries", SOLID STATE IONICS, NORTH HOLLAND PUB. COMPANY. AMSTERDAM; NL, NL, vol. 60, no. 4, 1 avril 1993 (1993-04-01), pages 357-365, XP025776227, ISSN: 0167-2738, DOI: 10.1016/0167-2738(93)90015-U [extrait le 1993-04-01]
- AONO H ET AL: "Ionic conductivity and sinterability of lithium titanium phosphate system", SOLID STATE IONICS, NORTH HOLLAND PUB. COMPANY. AMSTERDAM; NL, NL, vol. 40-41, 1 août 1990 (1990-08-01), pages 38-42, XP024594166, ISSN: 0167-2738, DOI: 10.1016/0167-2738(90)90282-V [extrait le 1990-08-01]

## Description

### Domaine technique

La présente invention se rapporte au domaine des batteries et notamment des batteries à ions de lithium. Elle concerne plus particulièrement les batteries à ions de lithium (« batteries Li-ion ») entièrement solides, et un nouveau procédé de fabrication de telles batteries.

### Etat de la technique

On connait des modes de fabrication des batteries à ions de lithium (« batteries Li-ion ») présentés dans de nombreux articles et brevets ; l'ouvrage « Advances in Lithium-Ion Batteries » (ed. W. van Schalkwijk et B. Scrosati), paru en 2002 (Kluever Academic / Plenum Publishers) en donne un bon état des lieux. Les électrodes des batteries Li-ion peuvent être fabriquées à l'aide de techniques d'impression ou de dépôt connues de l'homme du métier, et notamment par enduction au rouleau (« roll coating »), par racle (« doctor blade »), ou encore par coulage en bande (« tape casting »).

Il existe différentes architectures et compositions chimiques d'électrodes permettant de réaliser des batteries Li-ion. Récemment, des batteries Li-ion constituées de couches minces entièrement solides sont apparues. Ces batteries sont en général d'architectures planaires, c'est-à-dire qu'elles sont essentiellement constituées d'un ensemble de trois couches formant une cellule élémentaire de batterie : une couche d'anode et une couche de cathode séparées par une couche d'électrolyte. Plus récemment, des batteries Li-ion de structures tridimensionnelles ont été fabriquées par des nouveaux procédés. De tels procédés sont notamment divulgués dans les documents WO 2013/064 779 A1 ou WO 2012/064 777 A1. Dans ces documents, la fabrication des couches d'anode, d'électrolyte solide et de cathode est réalisée par électrophorèse. Les batteries obtenues par ce procédé présentent une forte densité de puissance ; elles présentent également une forte densité d'énergie (environ deux fois plus que les batteries à ions de lithium connues) dû au très faible taux de porosité et à la faible épaisseur des films d'électrolyte. De plus, les batteries obtenues par ces procédés ne contiennent pas de lithium métallique ni d'électrolytes organiques. Ainsi, elles peuvent résister lorsqu'elles sont soumises à des hautes températures. Enfin, lorsque ces dernières sont réalisées sous forme de composant électronique de type « microbatterie », elles peuvent alors être testées avant d'être soudées sur les circuits, et ce sans risque de détérioration, notamment lorsque les batteries se trouvent dans un état partiellement chargé ou déchargé.

Cependant, ces batteries entièrement solides peuvent être plus ou moins performantes. L'obtention de performances durables dans le temps dépend non seulement du choix des électrolytes, des paramètres de fabrication mais également de l'architecture globale de la batterie. Par exemple, en fonction de la nature et composition chimique du film d'électrolyte, des résistances internes peuvent apparaitre aux interfaces avec les électrodes.

D'autre part, certains électrolytes divulgués dans ces documents sont à base de sulfures, stables dans une large gamme de potentiel, mais ayant tendance à créer de fortes résistances au transfert des charges à leurs interfaces avec les électrodes. Par ailleurs, les électrolytes solides à base de sulfure sont extrêmement hygroscopiques ce qui peut rendre difficile leur mise en œuvre à échelle industrielle et peut induire une sensibilité particulière au vieillissement.

Par ailleurs, ces documents divulguent des électrolytes à base de verres conducteurs ioniques, tels qu'en LiPON ou en borate lithiés. Cependant, ces derniers présentent une température de transition vitreuse relativement basse et sont donc susceptibles de cristalliser partiellement lors de l'assemblage de la batterie par traitement thermique ; cela détériore leurs propriétés de conduction ionique. Enfin, ces composants restent assez sensibles au contact de l'atmosphère, ce qui rend leur mise en œuvre industrielle délicate.

On connait de nombreux matériaux utilisables comme électrolytes dans des batteries à ions de lithium, tels que ceux cités dans la demande de brevet US 2009 / 0162 755 A1 ou dans la publication de Amatucci G.G. et al: "Lithium scandium phosphate-based electrolytes for solid State lithium rechargeable microbatteries", Solid State Ionics, vol. 60 (1993) pages 357-365 (ISSN: 0167-2738)), notamment le Li₃(Sc₂₋ₓMₓ) (PO₄)₃, où M = Al³⁺ ou Y³⁺, ou ceux cités dans la demande de brevet US 2014 / 0 057 162 A1 comme les composés vitrocéramiques contenant au moins une phase cristalline conductrice d'ions lithium ayant une teneur totale en Ta₂O₅ d'au moins 0,5% massique.

On connait aussi des électrolytes comprenant des matériaux à base de phosphates lithiés, ces derniers étant stables au contact de l'atmosphère et stable à haut potentiel. Cependant, ces électrolytes sont le plus souvent instables au contact des anodes en lithium. L'instabilité de ces électrolytes au contact des anodes vient essentiellement de la présence d'éléments métalliques pouvant présenter plusieurs états d'oxydation qui, lors du contact avec les anodes à bas potentiel, vont se réduire et changer d'état d'oxydation. Cette modification chimique rend l'électrolyte peu à peu conducteur électronique, ce qui dégrade les performances de la batterie.

Dans cette famille d'électrolyte on trouve le Li₁₊ₓAlₓTi₂₋ₓ(PO₄)₃ (appelé LATP) pour lequel une réduction du titane peut apparaître à 2,4 V, et le Li₁₊ₓAlₓGe₂₋ₓ(PO₄)₃ (appelé LAGP) pour lequel une réduction du germanium peut apparaître à 1,8 V.

Outre la dégradation électrochimique des électrolytes et autres phénomènes de vieillissement liés à la sensibilité à l'air de certains constituants de la cellule batterie Li-ion, la dégradation des performances des batteries Li-ion peut également provenir de la cathode. En effet, les matériaux à insertion du lithium utilisés pour réaliser les cathodes présentent des comportements réversibles uniquement dans une certaine plage de potentiel. Lorsque le taux de lithium inséré diminue en dessous d'un certain seuil, des modifications cristallographiques peuvent apparaitre, occasionnant des pertes de performances irréversibles des matériaux de cathode. Cependant, les batteries Li-ion conventionnelles ainsi que les batteries Li-ion en couches minces utilisant des anodes en lithium métalliques, ont des capacités de stockage en ion lithium (au niveau de l'anode) supérieures à celle de la cathode. En effet, dans le cas des batteries avec des anodes en lithium métallique, la capacité de l'anode est quasiment illimitée, le lithium peut venir se déposer sur l'anode au fur et à mesure de son arrivée. Pour les batteries Li-ion standard utilisant des électrolytes liquides avec des sels de lithium, une capacité d'anode inférieure à celle de la cathode peut conduire à la formation de précipités de lithium métallique dans la batterie pendant la charge. Ces précipités se forment lorsque la cathode produit des ions lithium en excès par rapport à ce que l'anode est susceptible d'accepter. La formation de précipités de lithium métallique dans une cellule batterie pouvant occasionner un risque d'emballement thermique, il est par conséquent essentiel de s'assurer que les anodes ont des capacités suffisantes pour éviter l'apparition d'un tel risque.

Bien que plus sécuritaire, cette architecture peut dans certains cas conduire à extraire trop d'ions lithium de la cathode, surtout lors des phases de cyclage à forte puissance sur des batteries chargées. Cela peut détériorer de manière irréversible la capacité d'insertion de la batterie et conduire à son vieillissement.

Par ailleurs, le vieillissement de la batterie et la perte de sa capacité peuvent également provenir de la précipitation des ions lithium dans les porosités des électrodes, réduisant ainsi la quantité d'ions lithium disponibles pour le fonctionnement de la batterie, ainsi que la perte des contacts entre les particules d'électrodes.

Un premier but de la présente invention est la fabrication de batteries en couches minces entièrement solides, dont les matériaux utilisés pour les couches d'électrolyte soient stables au contact des anodes et des cathodes afin d'améliorer le fonctionnement et la durée de vie de ces batteries.

Encore un autre but est la fabrication de batteries en couches minces entièrement solides, dont les matériaux utilisés pour les couches d'électrolyte ne permettent pas la formation de précipités de lithium métallique, ou de résistance interne aux interfaces avec les électrodes.

Un autre but de l'invention est de fabriquer des batteries en couches minces par un procédé pouvant être mis en œuvre industriellement de manière assez simple.

### Objets de l'invention

Un premier objet de l'invention concerne un procédé de fabrication d'une batterie en couches minces entièrement solide comprenant les étapes successives suivantes :
a) on dépose une couche comprenant au moins un matériau d'anode (appelée ici « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériau de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose sur la couche obtenue à l'étape a) et/ou b) une couche comprenant au moins un matériau d'électrolyte solide (appelée ici « couche de matériau d'électrolyte ») choisi parmi :
   o le Li₁₊ₓMₓ(Sc)₂₋ₓ(PO₄)₃ avec M = Al, Y, Ga ou un mélange des trois composés et 0 ≤ x ≤ 0,8 ; ou
   o le Li₁₊ₓMₓ(Ga_{1-y}SC_{y})₂₋ₓ(PO₄)₃ avec 0 ≤ x ≤ 0,8 ; 0 ≤ y ≤ 1 et M= Al ou Y ; ou un mélange des deux composés ; ou
   o le Li₁₊ₓMₓ(Ga)₂₋ₓ(PO₄)₃ avec M = Al, Y ou un mélange des deux composés et 0 ≤ x ≤ 0,8 ; ou
   o Li_{3+y}(Sc₂₋ₓMₓ)Q_{y}P_{3-y}O₁₂, avec M = Al et/ou Y et Q = Si et/ou Se, 0 ≤ x ≤ 0,8 et 0 < y ≤ 1 ; Li_{3+y}(Sc₂₋ₓMₓ)Q_{y}P_{3-y}O₁₂, avec M = Al et Y, et Q = Si et/ou Se, 0 ≤ x ≤ 0,8 et 0 ≤ y ≤ 1 ; ou
   o Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou
   o Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ;
   o Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
d) on empile face sur face successivement :
   o soit une couche comprenant au moins un matériau d'anode revêtue d'une couche comprenant au moins un matériau d'électrolyte obtenue à l'étape c) avec une couche comprenant au moins un matériau de cathode revêtue ou non d'une couche comprenant au moins un matériau d'électrolyte obtenue à l'étape c) ;
   o soit une couche comprenant au moins un matériau de cathode revêtue d'une couche comprenant au moins un matériau d'électrolyte obtenue à l'étape c) avec une couche comprenant au moins un matériau d'anode revêtue ou non d'une couche comprenant au moins un matériau d'électrolyte obtenue à l'étape c) ;
e) on effectue un traitement thermique et/ou une compression mécanique de l'empilement obtenu à l'étape d) pour obtenir une batterie en couches minces entièrement solide.

Dans un mode de réalisation particulier du procédé selon l'invention, lorsqu'on dépose une couche de matériau d'électrolyte sur la couche obtenue à l'étape a) telle qu'indiquée dans le premier objet de l'invention, on dépose éventuellement sur la couche obtenue à l'étape b) une couche d'au moins un matériau choisi parmi :
o le Li₃(Sc₂₋ₓMₓ)(PO₄)₃ avec M=AI ou Y et 0 ≤ x ≤1 ; ou
o le Li₁₊ₓMₓ(Sc)₂₋ₓ(PO₄)₃ avec M = Al, Y, Ga ou un mélange de deux ou trois des composés et 0 ≤ x ≤ 0,8 ; ou
o le Li₁₊ₓMₓ(Ga_{1-y}SC_{y})₂₋ₓ(PO₄)₃ avec 0 ≤ x ≤ 0,8 ; 0 ≤ y ≤ 1 et M= Al ou Y, ou un mélange des deux composés ; ou
o le Li₁₊ₓAlₓTi₂₋ₓ(PO₄)₃ avec 0 ≤ x ≤ 1, ou
o le Li₁₊ₓAlₓGe₂₋ₓ(PO₄)₃ avec 0 ≤ x ≤ 1 ; ou
o le Li_{1-x+z}Mₓ(Ge_{1-y}Ti_{y})₂₋ₓSi_{z}P_{3-z}O₁₂ avec 0 ≤ x ≤ 0,8 ; 0 ≤ y ≤ 1 ; 0 ≤ z ≤ 0,6 et M= Al, Ga ou Y ou un mélange de deux ou trois de ces composés ; ou
o Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1; ou
o Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou
o Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ;
o Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés.

Selon l'invention, les couches comprenant au moins un matériau d'anode, au moins un matériau de cathode et au moins un matériau d'électrolyte solide sont déposées par une ou plusieurs techniques sélectionnées parmi les techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) électropulvérisation ;
(iv) électrophorèse ;
(v) aérosol deposition ;
(vi)sol-gel ;
(vii)trempage, plus particulièrement par trempage-retrait (dip-coating), trempage-tournette (spin-coating), ou par le procédé Langmuir-Blodgett.

Avantageusement, lesdites couches d'anode et/ou de cathode et/ou d'électrolyte sont réalisées par un dépôt de nanoparticules respectivement de matériau d'anode, de cathode ou d'électrolyte, par une ou plusieurs techniques sélectionnées parmi les techniques suivantes : électropulvérisation, électrophorèse, aérosol déposition, trempage.

De préférence, les couches d'anode, de cathode et d'électrolyte sont toutes déposées par électrophorèse, de préférence à partir de nanoparticules de matériau(x) de cathode, de matériau(x) d'électrode et de matériau(x) d'anode.

Selon l'invention, la couche de matériau d'anode a) est réalisée à partir de matériau choisi parmi :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z}avec a>0, b>0, a+b≤2, 0<y≤4, 0<z≤3) (appelés aussi SiTON), et en particulier le SiSn_{0,87}O_{1,2}N_{1,72} ; ainsi que les oxynitrures sous la forme SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N₂Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y}(en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

Selon l'invention, la couche de matériau de cathode b) est réalisée à partir de matériau de cathode choisi parmi :
(i) les oxydes LiMn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ; les phosphates de formule LiMM'PO₄, avec M et M' (M ≠ M') sélectionnés parmi Fe, Mn, Ni, Co, V ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

Dans un mode de réalisation particulier du procédé selon l'invention, les couches de matériau d'anode et/ou de cathode comprennent en outre des matériaux conducteurs électroniques, et en particulier de graphite, et/ou des nanoparticules de matériaux conducteurs des ions lithium, du type de ceux utilisés pour réaliser les films d'électrolyte, ou des matériaux polymère solide réticulé comportant des groupements ioniques.

Avantageusement, l'étape e) de traitement thermique est réalisée à une température comprise entre 200°C et 1000°C, de préférence entre 300°C et 700°C, et encore plus préférentiellement entre 300°C et 500°C, et/ou la compression mécanique est réalisée à une pression comprise entre 10 et 400 MPa, de préférence entre 20 et 100 MPa.

Dans un mode de réalisation particulier, le procédé selon l'invention comprend en outre une étape f) d'encapsulation de la batterie obtenue à l'étape e) par dépôt d'au moins une couche d'encapsulation de matériau céramique, vitreux ou vitrocéramique. Avantageusement, on découpe au moins deux faces de la batterie obtenue après l'étape f) afin de faire apparaitre uniquement les sections des cathodes sur le premier plan de coupe et uniquement les sections des anodes sur le second plan de coupe.

De préférence, on réalise des terminaisons anodiques et cathodiques par métallisation des sections découpées, de préférence par dépôt d'une couche d'étain, éventuellement déposée sur une sous-couche de nickel et/ou de résine époxy chargé en particules métalliques.

Dans un mode de réalisation particulier selon l'invention, on réalise un traitement thermique à une température comprise entre 300°C et 1000°C, de préférence entre 400°C et 800°C, et encore plus préférentiellement entre 500°C et 700°C pour recristalliser les matériaux d'anode et/ou de cathode, ledit traitement thermique étant réalisée après l'étape a) et/ou b) mais avant l'étape c) de dépôt de la couche s d'électrolyte. Avantageusement, la taille des nanoparticules de matériaux d'électrolyte est inférieure à 100 nm, de préférence inférieure à 30 nm.

Selon l'invention, l'étape f) d'encapsulation est réalisée par dépôt chimique par phase vapeur (CVD), et plus particulièrement assisté par plasma (PECVD), ou par dépôt chimique en phase vapeur par jet plasma (PSCVD).

Dans un mode de réalisation particulier selon l'invention, l'étape f) d'encapsulation de la batterie obtenue à l'étape e) est réalisée par dépôt de deux couches d'encapsulation de matériau céramique, vitreux ou vitrocéramique. Avantageusement la première couche d'encapsulation est réalisée par procédé de dépôt de couche atomique (ALD), préférentiellement d'une couche atomique d'oxyde de type Al₂O₃ ou Ta₂O₃ ou d'autres oxydes. Cette première couche est alors parfaitement couvrante et protège la batterie de l'environnement extérieur. La deuxième couche d'encapsulation peut être réalisée par dépôt chimique par phase vapeur (CVD), et plus particulièrement assisté par plasma (PECVD), ou par dépôt chimique en phase vapeur par jet plasma (PSCVD) de matériau céramique, vitreux ou vitrocéramique.

Selon l'invention, les substrats conducteurs sont en aluminium, en cuivre, en acier inoxydable, ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

Un autre objet de l'invention concerne une batterie en couches minces entièrement solide susceptible d'être obtenue par le procédé selon l'invention.

Avantageusement, la capacité surfacique de la cathode est supérieure ou égale à la capacité surfacique de l'anode.

Dans un mode de réalisation préféré, l'empilement des couches de cathode et d'anode est décalé latéralement.

Avantageusement, la batterie comprend au moins une couche d'encapsulation, de préférence une couche en céramique, verre ou en vitrocéramique. Encore plus avantageusement, la batterie comprend une deuxième couche d'encapsulation déposée sur ladite première couche d'encapsulation, ladite deuxième couche d'encapsulation étant de préférence en silicone ou en hexaméthyldisiloxane (HDMSO).

De préférence, ladite au moins une couche d'encapsulation revêt totalement quatre des six faces de ladite batterie et partiellement les deux faces restantes, situées sous les métallisations servant à la connectique de la batterie.

Dans un mode de réalisation particulier, la batterie comprend des terminaisons au niveau où les collecteurs de courant cathodique, respectivement anodique, sont apparents. Avantageusement, les connexions anodiques et les connexions cathodiques se trouvent sur les côtés opposés de l'empilement.

Selon un aspect particulier de l'invention, la batterie est entièrement inorganique.

### Description détaillée de l'invention

### 1. Définitions

Dans le cadre de la présente invention, on entend par « dépôt électrophorétique » ou « dépôt par électrophorèse » une couche déposée par un procédé de dépôt de particules préalablement mises en suspension dans un milieu liquide, sur un substrat de préférence conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt dit « dense » de particules se forme sur le substrat, si le potentiel zêta de la suspension des particules présente une valeur appropriée, et/ou suite à un traitement spécifique de densification de nature thermique et/ou mécanique. Ce dépôt présente une structure particulière et reconnaissable par l'homme du métier qui le distingue des dépôts obtenus par toute autre technique.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en D₅₀.

On entend par batterie « tout solide » (appelée aussi ici batterie « entièrement solide »), une batterie ne comprenant pas de matériau en phase liquide.

On entend par « capacité surfacique » d'une électrode la quantité d'ion lithium susceptible d'être insérée dans une électrode (exprimée en mA.h/cm²).

### 2. Description détaillée

La présente invention a pour but d'apporter des perfectionnements aux batteries divulguées dans les demandes WO 2013/064 779 A1 ou WO 2012/064 777 A1, en vue d'améliorer leur fabrication, leur comportement en température, et leur durée de vie. A cet effet, l'inventeur a mis au point un nouveau procédé de fabrication de batterie tout solide de structure multicouche, ne contenant pas de solvants organiques ni lithium métallique, afin qu'elles puissent être chauffées sans risque de combustion. Les batteries obtenues par le procédé selon l'invention sont de structure multicouches, en opposition aux structures planaires des batteries conventionnelles, afin d'obtenir des batteries possédant une bonne densité d'énergie et de puissance.

Les couches d'anode, de cathode et d'électrolyte solide sont déposées parmi au moins l'une des techniques suivantes :
i) dépôt physique par phase vapeur (PVD), et plus particulièrement par évaporation sous vide, par ablation laser, par faisceau d'ions, par pulvérisation cathodique ;
ii) dépôt chimique par phase vapeur (CVD), et plus particulièrement assisté par plasma (PECVD), assisté par laser (LACVD), ou assisté par aérosol (AA-CVD) ;
iii) électropulvérisation ;
iv) électrophorèse ;
v) aérosol deposition ;
vi) sol-gel ;
vii) trempage, plus particulièrement par trempage-retrait (dip-coating), trempage-tournette (spin-coating), ou par le procédé Langmuir-Blodgett.

Dans un mode de réalisation particulier, les couches d'anode, de cathode et d'électrolyte solide sont toutes déposées par électrophorèse. Le dépôt électrophorétique de particules se fait par l'application d'un champ électrique entre le substrat sur lequel est réalisé le dépôt et une contre-électrode, permettant de mettre en mouvement les particules chargées de la suspension colloïdale, et de les déposer sur le substrat. L'absence de liants et d'autres solvants déposés en surface avec les particules permet d'obtenir des dépôts très compacts. La compacité obtenue grâce au dépôt électrophorétique, limite les risques de craquelures ou d'apparition d'autres défauts dans le dépôt pendant les étapes de séchage. De plus, la vitesse de dépôt peut être élevée en fonction du champ électrique appliqué et de la mobilité électrophorétique des particules de la suspension.

Le procédé de fabrication d'une batterie tout solide comprend une étape a) de dépôt d'une couche de matériaux d'anode. La couche de matériaux d'anode est réalisée de préférence par électrophorèse. Les matériaux choisis pour la couche de matériau d'anode sont de préférence choisis parmi les matériaux suivants :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures sous la forme SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

Le Li₄Ti₅O₁₂ pour la réalisation d'une couche d'anode est particulièrement préférée. De plus, le Li₄Ti₅O₁₂ est un matériau à insertion du lithium insérant de manière réversible les ions lithium sans induire de déformation du matériau hôte.

Dans un autre mode de réalisation particulier, le LiFePO₄ est préféré. En fait, la couche d'anode peut être également réalisée par tout matériau dont le potentiel d'insertion au lithium est inférieur au potentiel d'insertion du matériau utilisé pour réaliser la couche de cathode. A titre d'exemple, le LiFePO₄ peut être utilisé comme matériau d'anode lorsque on utilise le LiMn_{1,5}Ni_{0,5}O₄ comme matériau de cathode.

Selon l'invention, le procédé de fabrication d'une batterie tout solide comprend une étape b) de dépôt d'une couche de matériaux de cathode. La couche de matériaux de cathode est réalisée de préférence par électrophorèse. Les matériaux choisis pour la couche de matériau d'anode sont de préférence choisis parmi les matériaux suivants :
(i) les oxydes LiMn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

Dans un mode de réalisation préféré, l'électrode de cathode est constituée d'une couche mince de LiMn₂O₄ ou de LiMn_{1,5}Ni_{0,5}O₄ , laquelle est déposée sur un substrat métallique, de préférence en nickel. Ce matériau présente l'avantage de ne pas recourir à des techniques de dépôt sous vide, et de ne pas recourir à des dépôts en salle sèche, i.e. en atmosphère sèche et propre. En effet, le LiMn₂O₄, comme le LiMn_{1,5}Ni_{0,5}O₄ ne sont pas sensibles spontanément à l'air. Cependant, il est recommandé d'éviter ces matériaux à des expositions prolongées à l'air. L'impact des expositions des matériaux de cathode à l'air pendant la fabrication des électrodes reste négligeable aux regards des durées de mise en oeuvre relativement courtes.

Pour la réalisation de l'anode ou de la cathode, on peut ajouter aux matériaux cités précédemment des nanoparticules de matériaux conducteurs électroniques, et en particulier de graphite, et/ou des nanoparticules de matériaux conducteurs ioniques, ou bien des conducteurs ioniques à base de polymère comportant des groupements ioniques. De préférence, les groupements ioniques sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonyl)imide, ou le n-(nonafluorobutanesulfonyle)-n-(trifluoromethanesulfonyle)-imide (de formule brute C₅F₁₂NO₄S₂, appelé aussi IM₁₄⁻).

Avantageusement, les dépôts de la couche de matériau d'anode et de cathode sont réalisés par un dépôt électrophorétique de nanoparticules de matériau d'anode et de cathode respectivement.

Avantageusement, les dépôts de la couche de nanoparticules de matériau d'anode et de cathode sont réalisés directement sur leur substrat métallique. Pour des faibles tailles de nanoparticules, i.e. inférieurs à 100 nm, et de préférence inférieure à 50 nm, le dépôt des couches d'anode, de cathode et d'électrolyte sont réalisées par électropulvérisation, électrophorèse, aérosol déposition, ou par trempage. Avantageusement, les couches d'anode, de cathode et d'électrolyte sont toutes déposées par électrophorèse. Ce mode de réalisation particulier du procédé selon l'invention permet d'obtenir une couche dense et compacte de nanoparticules, notamment par auto-densification (appelé « self-sintering ») de la couche de nanoparticules lors de l'étape de dépôt électrophorétique, de séchage et/ou de traitement thermique à basse température. Par ailleurs, le dépôt électrophorétique de la couche de nanoparticules de matériau d'anode ou de cathode étant compact, le risque de fissuration de la couche après séchage est réduit, et ce, contrairement aux couches de nanoparticules réalisées à partir d'encres ou de fluides, ayant de faibles extraits secs et pour lesquels les dépôts contiennent du solvant en grande quantité, qui après séchage donne lieu à l'apparition de fissures dans le dépôt, nuisible pour le fonctionnement d'une batterie.

Selon l'invention, le dépôt de la couche de nanoparticules de matériau d'anode ou de cathode est réalisé directement sur son substrat conducteur, de préférence un substrat conducteur métallique choisi parmi les matériaux suivants : nickel, aluminium ou cuivre. Dans un mode de réalisation préféré, le dépôt de la couche de nanoparticules de matériau d'anode ou de cathode est réalisé sur un substrat en nickel. L'épaisseur du substrat est inférieur à 10 µm, de préférence inférieure à 5 µm.

Les substrats conducteurs peuvent être utilisés sous forme de feuilles, éventuellement des feuilles comprenant les motifs des électrodes pré-découpés ou sous forme de bandes. Afin d'améliorer la qualité des contacts électriques avec les électrodes, les substrats peuvent avantageusement être revêtus d'un métal ou d'un alliage de métaux, de préférence choisi parmi l'or, le chrome, l'inox, le palladium, le molybdène, le titane, le tantale, ou l'argent.

Selon l'invention, le dépôt d'une couche de nanoparticules de matériau d'anode ou de cathode directement sur son substrat conducteur, par exemple par électrophorèse, permet d'obtenir une couche dense de structure nanocristalline. Cependant, la formation de joints de grains est possible, conduisant à formation d'une couche de structure particulière, entre celle d'un matériau amorphe et cristallisé, ce qui peut limiter la cinétique de diffusion des ions lithiums dans l'épaisseur de l'électrode. Ainsi, la puissance de l'électrode de la batterie et le cycle de vie peuvent être affectés. Avantageusement, afin d'améliorer les performances de la batterie, un traitement thermique de recristallisation est réalisé pour améliorer la cristallinité, et éventuellement la consolidation de l'électrode afin de renforcer la puissance des électrodes (anode et/ou cathode).

Le traitement thermique de recristallisation de la couche d'anode et/ou de cathode est réalisé à une température comprise entre 300°C et 1000°C, de préférence entre 400°C et 800°C, et encore plus préférentiellement entre 500°C et 700°C. Le traitement thermique doit être réalisé après l'étape a) et/ou b) de dépôt de la couche d'anode et/ou de cathode, mais avant l'étape c) de dépôt de la couche de nanoparticules d'électrolyte.

Selon l'invention, le procédé de fabrication d'une batterie comprend une étape c) de dépôt d'une couche de matériau d'électrolyte. Le dépôt de la couche de matériau d'électrolyte est réalisé sur la couche de matériau d'anode, et/ou sur la couche de matériau de cathode. Le dépôt d'une couche d'électrolyte solide sur la couche d'anode ou de cathode permet de protéger la cellule électrochimique de court-circuit interne. Il permet également de réaliser une batterie entièrement solide comportant une durée de vie élevée, et simple de fabrication. Le dépôt de la couche de matériau d'électrolyte est de préférence réalisé par électrophorèse.

Plus particulièrement, les matériaux choisis en tant que matériaux d'électrolyte, et déposés sur la couche obtenue à l'étape a) et/ou b), sont de préférence choisis parmi les matériaux suivants :
o le Li₁₊ₓMₓ(Sc)₂₋ₓ(PO₄)₃ avec M = Al, Y, Ga ou un mélange de deux ou trois des composés et 0 ≤ x ≤ 0,8 ; ou
o le Li₁₊ₓMₓ(Ga)₂₋ₓ(PO₄)₃ avec M = Al, Y ou un mélange des deux composés M et 0 ≤ x ≤ 0,8 ; ou
∘ le Li₁₊ₓMₓ(Ga_{1-y}Sc_{y})₂₋ₓ(PO₄)₃ avec 0 ≤ x ≤ 0,8 ; 0 ≤ y ≤ 1,0 et M= Al ou Y, ou un mélange des deux composés ; ou
∘ Li_{3+y}(Sc₂₋ₓMₓ)Q_{y}P_{3-y}O₁₂, avec M = Al et/ou Y et Q = Si et/ou Se, 0 ≤ x ≤ 0,8 et 0 < y ≤ 1 ; Li_{3+y}(Sc₂₋ₓMₓ)Q_{y}P_{3-y}O₁₂ avec M = Al et Y, et Q = Si et/ou Se, 0 ≤ x ≤ 0,8 et 0 ≤ y ≤ 1 ; ou
∘ Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou
∘ Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ;
∘ Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés.

Dans un mode de réalisation particulier du procédé selon l'invention, lorsqu'on dépose une couche de matériau d'électrolyte sur la couche obtenue à l'étape a), on peut déposer éventuellement sur la couche obtenue à l'étape b) une couche d'au moins un matériau choisi parmi :
∘ le Li₃(Sc₂₋ₓMₓ)(PO₄)₃ avec M=AI ou Y et 0 ≤ x ≤1 ; ou
∘ le Li₁₊ₓMₓ(Sc)₂₋ₓ(PO₄)₃ avec M = Al, Y, Ga ou un mélange de deux ou trois des composés et 0 ≤ x ≤ 0,8; ou
∘ le Li₁₊ₓMₓ(Ga)₂₋ₓ(PO₄)₃ avec M = Al, Y ou un mélange des deux composés M et 0 ≤ x ≤ 0,8 ; ou
∘ le Li₁₊ₓMₓ(Ga_{1-y}Sc_{y})₂₋ₓ(PO₄)₃ avec 0 ≤ x ≤ 0,8 ; 0 ≤ y ≤ 1,0 et M= Al ou Y, ou un mélange des deux composés ; ou
∘ le Li₁₊ₓAlₓTi₂₋ₓ(PO₄)₃ avec 0 ≤ x ≤ 1, ou
∘ le Li₁₊ₓAlₓGe₂₋ₓ(PO₄)₃ avec 0 ≤ x ≤ 1 ; ou
∘ le Li_{1+x+z}Mₓ(Ge_{1-y}Ti_{y})₂₋ₓSi_{z}P_{3-z}O₁₂ avec 0≤x≤0,8 et 0≤y≤1,0 et 0≤z≤0,6 et M= Al, Ga ou Y ou un mélange de deux ou trois de ces composés ; ou
∘ Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou
∘ Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou
∘ Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ;
∘ Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés.

D'autres matériaux électrolytiques à base de scandium peuvent également convenir, quand bien même ils n'appartiennent pas à la formule générale précédente. On peut citer notamment les compositions chimiques de type Li₃Sc₂(PO₄)₃ ou encore Li_{4,8}Sc_{1,4}(PO₄)₃.

Les électrolytes solides à base de phosphates lithiés sont stables au contact de l'atmosphère et stables à haut potentiel, ce qui rend plus aisé la fabrication de batterie à échelle industrielle. La stabilité de ces électrolytes contribue également à conférer à la batterie résultante de bonnes performances de durée de vie calendaire. Enfin, les électrolytes à base de phosphate lithiés créent peu d'effets résistifs aux interfaces avec les électrodes et peuvent être utilisés dans la fabrication de batteries "tout solide", notamment avec des cathodes fonctionnant à des tensions élevées, comme par exemple les matériaux de cathodes 5V de type LiMn_{1,5}Ni_{0,5}O₄.

Par ailleurs, les matériaux à base de phosphate lithiés présentent une faible température de fusion, par rapport aux matériaux utilisés conventionnellement dans les batteries Li-ion, ce qui autorise des assemblages de cellules tout solide par « soudage par diffusion » (appelé en anglais « diffusion bonding ») et/ou par frittage à basse température.

La couche d'électrolyte déposée par le procédé selon l'invention comprend des matériaux solides de type phosphate lithités, ces derniers étant stables dans le temps au contact des anodes et stables également au contact de l'atmosphère. De plus, la couche d'électrolyte solide au contact de l'anode ne comprend pas d'ions métalliques susceptibles de se réduire au contact des anodes. Ainsi, la couche d'électrolyte solide déposée par le procédé selon l'invention comprend au moins des matériaux à base de scandium et/ou de gallium. Par ailleurs, le scandium et le gallium ne présentent qu'un seul état d'oxydation et donc ne risquent pas de changer d'état d'oxydation au contact de l'anode et/ou de la cathode. Aussi, l'électrolyte solide à base de phosphate lithié, dopé au scandium et/ou au gallium, est à la fois un bon conducteur ionique et stable dans le temps au contact des électrodes de batterie.

Avantageusement, la couche d'électrolyte solide est réalisée par dépôt électrophorétiques de nanoparticules de matériau d'électrolyte, isolantes électriquement. Les couches obtenues sont totalement couvrants, sans défauts localisés. Les densités de courant de dépôt se concentrant sur les zones les moins isolantes, notamment localisé où un défaut est éventuellement présent.

L'absence de défauts dans la couche d'électrolyte, évite l'apparition de courts-circuits rampants, d'autodécharges excessives, voire de défaillance de la cellule de la batterie.

La technique de dépôt électrophorétique permet aussi d'obtenir des couches denses de matériaux d'électrodes et/ou d'électrolyte. Lorsque la taille des particules à déposer est inférieure à 100 nm, de préférence inférieure à 50 nm, et encore plus préférentiellement inférieure à 30 nm, il est possible d'obtenir des couches denses par électrophorèse directement sur les substrats conducteurs métalliques, avec une densité supérieure à 50% de la densité théorique du corps massif. Afin d'éviter la fissuration des couches après dépôt, les nanoparticules mises en suspensions doivent être de faibles dimensions et parfaitement stables. En fonction des propriétés des nanoparticules déposées, de la compacité, de l'épaisseur des couches, un traitement thermique et/ou mécanique supplémentaire peut être effectué pour densifier les dépôts desdites couches lors de l'étape d'assemblage. Cela peut conduire à des densités supérieures à 85% voire supérieure à 90% de la densité théorique du corps massif.

Pour le dépôt par électrophorèse d'une suspension de nanoparticules de taille inférieure à 100 nm, de préférence inférieure à 50 nm, et encore plus préférentiellement inférieure à 30 nm, les couches obtenues peuvent être denses directement après dépôt, notamment lorsque les matériaux déposés sont peu réfractaires et possèdent une énergie de surface élevée. La consolidation de la couche mince juste après dépôt présente l'avantage de diminuer considérablement le traitement thermique, qui peut conduire à des phénomènes d'interdiffusion aux interfaces entre les électrodes et le film d'électrolyte, voir à la formation de nouveaux composés chimiques pouvant être très résistifs pour la diffusion des ions lithium.

Selon un mode particulier du procédé de l'invention, les électrodes (anode et cathode) sont « poinçonnées » selon un motif de découpe afin de réaliser des découpes aux dimensions de la batterie à réaliser. Ces motifs comprennent trois découpes qui se jouxtent (par exemple en forme de U) et qui définissent la dimension de la batterie. Une deuxième fente peut être réalisée sur le côté non découpé afin de pouvoir assurer le passage des produits nécessaires à l'encapsulation du composant. Les électrodes anodiques et cathodiques sont ensuite empilées de manière alternée afin de constituer un empilement de plusieurs cellules élémentaires. Les motifs de découpes des anodes et cathodes sont placés en configuration « tête bêche ».

Dans un autre mode de réalisation particulier du procédé selon l'invention, les électrodes sont découpées avant l'étape c) de dépôt de la ou les couche(s) d'électrolyte, permettant le recouvrement des bords d'électrodes par un film d'électrolyte, protégeant ainsi le contact des électrodes avec l'atmosphère, et permettant d'améliorer la durée de vie calendaire de la batterie. Dans un mode de réalisation alternatif, les découpes sont réalisées sur les substrats avant les étapes a) et b) de dépôt de la couche d'anode et de cathode, permettant un recouvrement des bords d'électrodes par un film d'électrolyte. Ce mode de réalisation particulier présente l'avantage de recouvrir les bords d'électrodes avant le dépôt de la couche de nanoparticules de matériau d'électrolyte, ce qui permet par la suite de réaliser aisément un film d'encapsulation autour des électrodes, surtout lorsque la couche d'électrolyte est composée de matériaux stables à l'humidité. Le recouvrement des bords latéraux des électrodes permet également de réduire les risques de court-circuit dans la cellule.

Enfin, une étape essentielle du procédé selon l'invention comprend un traitement thermique et/ou une compression mécanique de l'empilement obtenu précédemment pour obtenir une batterie en couches minces entièrement solide.

Le traitement thermique est réalisé à une température comprise entre 200 et 1000°C, de préférence 300 et 700°C, et encore plus préférentiellement entre 300 et 500°C. Avantageusement, la température du traitement thermique ne dépasse pas 600°C.

Avantageusement, la compression mécanique des couches à assembler est réalisée à une pression comprise entre 10 et 400 MPa, de préférence entre 20 et 100 MPa.

Dans un mode de réalisation particulier, il est avantageux, après l'étape d'empilement et avant l'ajout des terminaisons, d'encapsuler l'empilement en déposant une couche mince d'encapsulation pour assurer la protection de la cellule de la batterie vis-à-vis de l'atmosphère. La couche d'encapsulation doit être stable chimiquement, résister à une température élevée et être imperméable à l'atmosphère pour jouer sa fonction de couche barrière. Par exemple, la couche mince d'encapsulation est constituée soit d'un polymère, soit d'une céramique, d'un verre ou d'une vitrocéramique, pouvant être par exemple sous forme d'oxyde, de nitrure, de phosphates, d'oxynitrure, ou de siloxane. Avantageusement cette couche d'encapsulation comprend une couche de céramique, de verre ou de vitrocéramique revêtue d'une résine époxy ou de silicone.

La couche d'encapsulation peut être avantageusement déposée par dépôt chimique en phase vapeur (CVD), ce qui permet d'avoir un recouvrement de l'ensemble des surfaces de l'empilement accessible. Ainsi, l'encapsulation peut ainsi réalisée directement sur les empilements, le revêtement pouvant pénétrer dans l'ensemble des cavités disponibles. Avantageusement, une seconde couche d'encapsulation peut être déposée sur la première couche d'encapsulation pour augmenter la protection des cellules batteries de leur environnement externe. Typiquement, le dépôt de cette seconde couche peut être réalisé par une imprégnation de silicone. Le choix d'un tel matériau vient du fait qu'il résiste à des températures élevées et la batterie peut ainsi être assemblée aisément par soudure sur des cartes électroniques sans apparition de transitions vitreuses des matériaux d'encapsulation.

Avantageusement, l'encapsulation de la batterie est réalisée sur quatre des six faces de l'empilement. L'encapsulation recouvre complètement la surface de quatre des six faces de la batterie. Les surfaces des deux faces (opposées) restantes de la batterie sont partiellement recouvertes d'au moins ne couche d'encapsulation, la protection des surfaces non protégées de ces deux faces est assurée par les terminaisons servant à la connectique de la batterie.

De manière préférentielle les couches d'anode et de cathode sont décalées latéralement, ce qui permet à la couche d'encapsulation de recouvrir les bords des électrodes de signe opposé à celui de la terminaison. Ce dépôt d'encapsulation sur les rebords des électrodes non connectées aux terminaisons, permet d'éviter la présence de court-circuit sur ces extrémités.

Une fois l'empilement réalisé, et après l'étape d'encapsulation de l'empilement si cette dernière est réalisée, des terminaisons (contacts électriques) sont ajoutées au niveau où les collecteurs de courant cathodiques, respectivement anodiques sont apparents (non revêtus de couches d'encapsulation). Ces zones de contact peuvent être sur les côtés opposés de l'empilement pour collecter le courant mais également sur des côtés adjacents.

Pour réaliser les terminaisons, l'empilement, éventuellement enrobé, est découpé suivant des plans de coupe permettant d'obtenir des composants de batterie unitaires, avec la mise à nue sur chacun des plans de coupe des connexions (+) et (-) de la batterie. Les connexions peuvent ensuite être métallisées à l'aide de techniques de dépôt plasma connu de l'homme du métier et / ou par immersion dans une résine époxy conductrice (chargée à l'argent) et / ou un bain d'étain en fusion. Les terminaisons permettent de reprendre les connections électriques alternativement positives et négatives sur chacune des extrémités. Ces terminaisons permettent de réaliser les connections électriques en parallèle entre les différents éléments de batterie. Pour cela, seules les connections (+) sortent sur une extrémité, et les (-) sont disponibles sur les autres extrémités.

Cette batterie étant entièrement solide, et utilisant un matériau à insertion du lithium comme matériau d'anode, les risques de formation de dendrites de lithium métallique durant les étapes de recharge sont nuls et la capacité d'insertion de l'anode en lithium devient limitée.

Aussi, afin de garantir de bonnes performances en cyclage de la batterie selon l'invention l'architecture de batterie pour laquelle la capacité surfacique des cathodes est supérieure ou égale à la capacité surfacique des anodes est préférée.

Les couches constitutives de la batterie étant entièrement solide, le risque de formation de dendrites de lithium n'existe plus lorsque l'anode est totalement chargée. Ainsi, une telle architecture de batterie évite la création de surcharge de cellules de batterie.

Aussi, la réalisation d'une telle batterie avec des capacités surfaciques de cathodes supérieures ou égales à celles des anodes permet d'accroitre les performances en termes de durée de vie, exprimée en nombre de cycles. En effet, les électrodes étant denses et entièrement solides, le risque de perte de contact électrique entre les particules est nul. De plus, il n'existe plus de risque de dépôt de lithium métallique dans l'électrolyte ou dans les porosités des électrodes, et enfin le risque de détérioration de la structure cristalline du matériau de cathode est inexistant.

### Exemple (avec un matériau d'électrolyte ne faisant pas partie de l'invention)

Une suspension du matériau d'anode a été obtenue par broyage puis dispersion de Li₄Ti₅O₁₂ dans de l'éthanol absolu à 10g/l avec quelques ppm d'acide citrique. Une suspension de matériau de cathode a été obtenue par broyage puis dispersion de LiMn₂O₄ dans de l'éthanol absolu à 25 g/l. La suspension de cathode a ensuite été diluée dans l'acétone jusqu'à une concentration de 5 g/l. La suspension de matériau d'électrolyte céramique a été obtenue par broyage puis dispersion d'une poudre de Li₃Al_{0,4}Sc_{1,6}(PO₄)₃ dans de l'éthanol absolu à 5g/l.

Pour toutes ces suspensions, les broyages ont été conduits de manière à obtenir des suspensions stables avec des tailles de particules inférieures à 100 nm.

Les électrodes négatives ont été préparées par dépôt électrophorétique des nanoparticules de Li₄Ti₅O₁₂ contenues dans la suspension préalablement préparée. Le film mince de Li₄Ti₅O₁₂ (environ 1 micron) a été déposé sur les deux faces du substrat. Ces électrodes négatives ont ensuite été traitées thermiquement à 600°C.

Les électrodes positives ont été préparées de la même manière, par dépôt électrophorétique à partir de la suspension de LiMn₂O₄. Le film mince de LiMn₂O₄ (environ 1 µm) a été déposé sur les deux faces du substrat. Les électrodes positives ont ensuite été traitées à 600°C.

Après traitement thermique, les électrodes négatives et les électrodes positives ont été recouvertes d'une couche d'électrolyte céramique Li₃Al_{0,4}Sc_{1,6}(PO₄)₃ par EPD. L'épaisseur de LASP est d'environ 500nm sur chaque électrode. Ces films d'électrolyte ont ensuite été séchés.

L'empilement des anodes et cathodes revêtues Li₃Al_{0,4}SC_{1,6}(PO₄)₃ a été ensuite réalisé afin d'obtenir un empilement multicouche. L'ensemble a ensuite été maintenu sous pression pendant 15 minutes à 600°C pour réaliser l'assemblage.

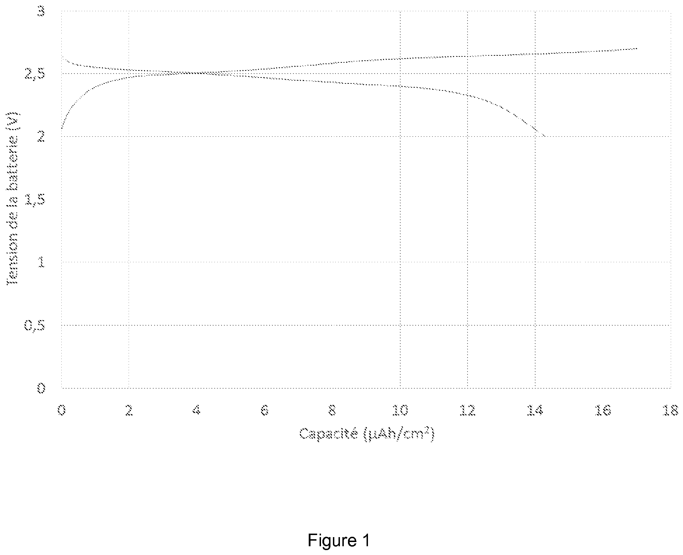

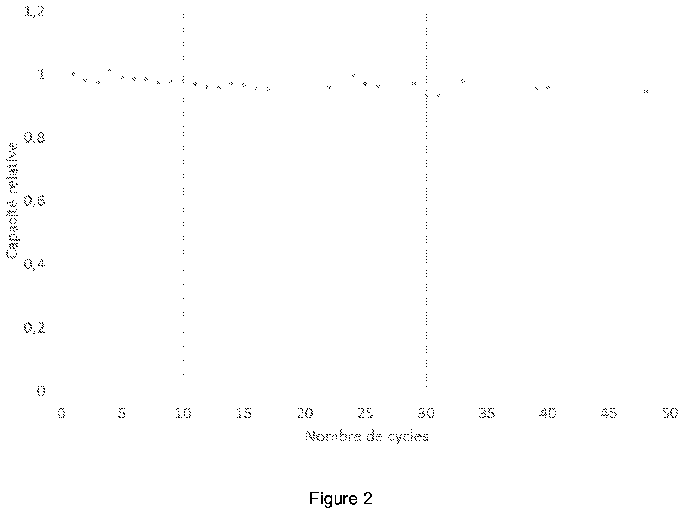

La batterie ainsi obtenue a été cyclée entre 2 et 2,7V. La figure 1 présente les courbes de charge et décharge obtenues avec cette batterie. La figure 2 illustre l'évolution de la capacité de la batterie ainsi réalisée en cyclage.

## Revendications

1. Procédé de fabrication d'une batterie en couches minces entièrement solide comprenant les étapes successives suivantes :
a) on dépose une couche comprenant au moins un matériau d'anode (appelée ici « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériau de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose sur la couche obtenue à l'étape a) et/ou b) une couche comprenant au moins un matériau d'électrolyte solide (appelée ici « couche de matériau d'électrolyte ») choisi parmi :
∘ le Li₁₊ₓMₓ(Sc)₂₋ₓ(PO₄)₃ avec M = Al, Y, Ga ou un mélange des trois composés et 0 ≤ x ≤ 0,8; ou
∘ le Li₁₋ₓMₓ(Ga_{1-y}Sc_{y})₂₋ₓ(PO₄)₃ avec 0 ≤ x ≤ 0,8 ; 0 ≤ y ≤ 1 et M= Al ou Y ; ou un mélange des deux composés ;
∘ le Li₁₊ₓMₓ(Ga)₂₋ₓ(PO₄)₃ avec M = Al, Y ou un mélange des deux composés et 0 ≤ x ≤ 0,8 ; ou
∘ Li_{3+y}(Sc₂₋ₓMₓ)Q_{y}P_{3-y}O₁₂, avec M = Al et/ou Y et Q = Si et/ou Se, 0 ≤ x ≤ 0,8 et 0 < y ≤ 1 ; Li_{3+y}(Sc₂₋ₓMₓ)Q_{y}P_{3-y}O₁₂, avec M = Al et Y et Q = Si et/ou Se, 0 ≤ x ≤ 0,8 et 0 ≤ y ≤ 1 ; ou
∘ Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou
∘ Li_{1+x+y+z}Mₓ(Ga_{1-y}SC_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ;
∘ Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
d) on empile face sur face successivement :
∘ soit une couche comprenant au moins un matériau d'anode revêtue d'une couche comprenant au moins un matériau d'électrolyte obtenue à l'étape c) avec une couche comprenant au moins un matériau de cathode revêtue ou non d'une couche comprenant au moins un matériau d'électrolyte obtenue à l'étape c) ;
∘ soit une couche comprenant au moins un matériau de cathode revêtue d'une couche comprenant au moins un matériau d'électrolyte obtenue à l'étape c) avec une couche comprenant au moins un matériau d'anode revêtue ou non d'une couche de matériau d'électrolyte obtenue à l'étape c);
e) on effectue un traitement thermique et/ou une compression mécanique de l'empilement obtenu à l'étape d) pour obtenir une batterie en couches minces entièrement solide,
f) optionnellement, on effectue une étape d'encapsulation de la batterie obtenue à l'étape e) par dépôt d'au moins une couche d'encapsulation de matériau céramique, vitreux ou vitrocéramique, de préférence, par dépôt chimique par phase vapeur (CVD), et plus particulièrement assisté par plasma (PECVD), ou par dépôt chimique en phase vapeur par jet plasma (PSCVD).

2. Procédé selon la revendication 1, **caractérisé en ce que** lorsqu'on dépose une couche de matériau d'électrolyte sur la couche obtenue à l'étape a), on dépose sur la couche obtenue à l'étape b) une couche d'au moins un matériau choisi parmi :
∘ le Li₃(Sc₂₋ₓMₓ)(PO₄)₃ avec M=AI ou Y et 0 ≤ x ≤1 ; ou
∘ le Li₁₊ₓMₓ(Sc)₂₋ₓ(PO₄)₃ avec M = Al, Y, Ga ou un mélange de deux ou trois des composés et 0 ≤ x ≤ 0,8; ou
∘ le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y, ou un mélange des deux composés ; ou
∘ le Li₁₊ₓAlₓTi₂₋ₓ(PO₄)₃ avec 0 ≤ x ≤ 1, ou
∘ le Li₁₊ₓAlₓGe₂₋ₓ(PO₄)₃ avec 0 ≤ x ≤ 1 ; ou
∘ le Li_{1+x+z}Mₓ(Ge_{1-y}Ti_{y})₂₋ₓSi_{z}P_{3-z}O₁₂ avec 0 ≤ x ≤ 0,8 ; 0 ≤ y ≤ 1 ; 0 ≤ z ≤ 0,6 et M= Al, Ga ou Y ou un mélange de deux ou trois de ces composés ; ou
∘ Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou
∘ Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou
∘ Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec et M = Al ou Y ou un mélange des deux composés et Q= Si et/ou Se ;
∘ Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés.

3. Procédé selon la revendication 1 ou 2, **caractérisé en ce que** les couches d'anode, de cathode et d'électrolyte solide sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) électropulvérisation ;
(iv) électrophorèse ;
(v) aérosol déposition ;
(vi) sol-gel ;
(vii)trempage, plus particulièrement par trempage-retrait (dip-coating), trempage-tournette (spin-coating), ou par le procédé Langmuir-Blodgett.
et sont, de préférence réalisées par un dépôt de nanoparticules respectivement de matériau d'anode, de cathode ou d'électrolyte parmi l'une au moins des techniques suivantes : électropulvérisation, électrophorèse, aérosol déposition, trempage, et sont encore plus préférentiellement, toutes déposées par électrophorèse, de préférence à partir de nanoparticules.

4. Procédé selon l'une quelconque des revendications 1 à 3, **caractérisé en ce que** les couches de matériau d'anode et/ou de cathode comprennent en outre des matériaux conducteurs électroniques, et en particulier de graphite, et/ou des nanoparticules de matériaux conducteurs des ions lithium, du type de ceux utilisés pour réaliser les films d'électrolyte ou des matériaux polymère solide réticulé comportant des groupements ioniques.

5. Procédé selon l'une quelconque des revendications 1 à 4, **caractérisé en ce que** :
- la couche de matériau d'anode a) est réalisée à partir de matériau choisi parmi :
(i) les oxynitrures d'étain de formule typique SnOₓN_{y} ;
(ii) le phosphate de fer lithié de formule typique LiFePO₄ ;
(iii) les oxynitrures mixtes de silicium et étain de formule typique SiₐSn_{b}O_{y}N_{z} avec a>0, b>0, a+b≤2, 0<y≤4, 0<z≤3, et en particulier le SiSn_{0,87}O_{1,2}N_{1,72} ; ainsi que les oxynitrures sous la forme SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y}, en particulier avec x=3 et y=4 ; SnₓN_{y}, en particulier avec x=3 et y=4 ; ZnₓN_{y}, en particulier avec x=3 et y=4 ; Li₃₋ₓMₓN avec M = Co, Ni, Cu ;
(v) les oxydes SnO₂, Li₄Ti₅O₁₂, SnB_{0,6}P_{0,4}O_{2,9} et TiO₂.
et/ou **en ce que** :
- la couche de matériau de cathode b) est réalisée à partir de matériau de cathode choisi parmi :
o les oxydes LiMn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}Co_{1/3}O₄;
o les phosphates LiFePO₄, LiMnPO₄, LiCoPO₄, LiNiPO₄, Li₃V₂(PO₄)₃ ; les phosphates de formule LiMM'PO₄, avec M et M' (M ≠ M') sélectionnés parmi Fe, Mn, Ni, Co, V ;
o toutes les formes lithiées des chalcogénides suivants : V₂O₅, V₃O₈, TiS₂, les oxysulfures de titane TiO_{y}S_{z}, les oxysulfures de tungstène WO_{y}S_{z}, CuS, CuS₂.

6. Procédé selon l'une quelconque des revendications 1 à 5, **caractérisé en ce que** l'étape e) de traitement thermique est réalisé à une température comprise entre 200°C et 1000°C, de préférence entre 300°C et 700°C, et encore plus préférentiellement entre 300°C et 500°C, et/ou la compression mécanique est réalisée à une pression comprise entre 10 et 400 MPa, de préférence entre 20 et 100 MPa.

7. Procédé selon l'une quelconque des revendications 1 à 6, **caractérisé en ce qu'**on découpe au moins deux faces de la batterie obtenue après l'étape f) pour faire apparaitre uniquement des sections de cathode sur le premier plan de coupe et uniquement des sections d'anode sur le second plan de coupe.

8. Procédé selon la revendication 7, **caractérisé en ce qu'**on réalise des terminaisons anodiques et cathodiques par métallisation des sections découpées, de préférence par dépôt d'une couche d'étain, éventuellement déposée sur une sous-couche de nickel et/ou de résine époxy chargé en particules métalliques.

9. Procédé selon l'une quelconque des revendications 1 à 8, **caractérise en ce qu'**on réalise un traitement thermique à une température comprise entre 300°C et 1000°C, de préférence entre 400°C et 800°C, et encore plus préférentiellement entre 500°C et 700°C pour recristalliser les matériaux d'anode et/ou de cathode, ledit traitement thermique étant réalisée après l'étape a) et/ou b) mais avant l'étape c) de dépôt de la couche d'électrolyte.

10. Procédé selon l'une quelconque des revendications 3 à 9, **caractérisé en ce que** la taille des nanoparticules de matériaux d'électrolyte est inférieure à 100 nm, de préférence inférieure à 30 nm, lorsque les couches d'anode et/ou de cathode et/ou d'électrolyte sont réalisées par un dépôt de nanoparticules respectivement de matériau d'anode, de cathode ou d'électrolyte parmi l'une au moins des techniques suivantes : électropulvérisation, électrophorèse, aérosol déposition, trempage.

11. Procédé selon l'une quelconque des revendications 1 à 10, **caractérisé en ce que** les substrats conducteurs sont en aluminium, en cuivre, en acier inoxydable, ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

12. Batterie en couches minces entièrement solide susceptible d'être obtenue par le procédé selon l'une quelconque des revendications 1 à 11, présentant de préférence, une capacité surfacique de la cathode supérieure ou égale à la capacité surfacique de l'anode.

13. Batterie selon la revendication 12, **caractérisée en ce que** l'empilement des couches de cathode et d'anode est décalé latéralement.

14. Batterie selon l'une quelconque des revendications 12 ou 13, **caractérisée en ce qu'**elle comprend au moins une couche d'encapsulation, de préférence une couche en céramique, verre ou en vitrocéramique, et de préférence une deuxième couche d'encapsulation déposée sur ladite première couche d'encapsulation, ladite deuxième couche d'encapsulation étant de préférence en silicone.

15. Batterie selon la revendication 14, **caractérisée en ce que** ladite au moins une couche d'encapsulation revêt totalement quatre des six faces de ladite batterie et partiellement les deux faces restantes, située sous les métallisations servant à la connectique de la batterie.

16. Batterie selon l'une quelconque des revendications 12 à 15 **caractérisée en ce qu'**elle comprend des terminaisons au niveau où les collecteurs de courant cathodique, respectivement anodique, sont apparents, les connexions anodiques et les connexions cathodiques se trouvant de préférence sur les côtés opposés de l'empilement.

17. Batterie selon l'une quelconque des revendications 12 à 16, **caractérisée en ce qu'**elle est entièrement inorganique.

## Patentansprüche

1. Verfahren zur Herstellung einer Ganzfestkörperbatterie mit Dünnschichten, die folgenden aufeinanderfolgenden Schritte umfassend:
a) Aufbringen einer Schicht, die mindestens ein Anodenmaterial (hier als "Anodenmaterialschicht" bezeichnet) umfasst, auf ihrem leitfähigen Substrat, vorzugsweise ausgewählt aus der Gruppe bestehend aus einer Metallfolie, einem Metallband, einer metallisierten Isolierfolie, einem metallisierten Isolierband, einem metallisierten Isolierfilm, wobei diese leitfähigen Substrate oder ihre leitfähigen Elemente als Anodenstromkollektor dienen können;
b) Aufbringen einer Schicht, die mindestens ein Kathodenmaterial (hier als "Kathodenmaterialschicht" bezeichnet) umfasst, auf ihrem leitfähigen Substrat, vorzugsweise ausgewählt aus der Gruppe bestehend aus einer Metallfolie, einem Metallband, einer metallisierten Isolierfolie, einem metallisierten Isolierband, einem metallisierten Isolierfilm, wobei diese leitfähigen Substrate oder ihre leitfähigen Elemente als Kathodenstromkollektor dienen können, wobei es sich versteht, dass die Schritte a) und b) umgekehrt werden können;
c) Aufbringen, auf die in Schritt a) und/oder b) erhaltene Schicht, einer Schicht, die mindestens ein Festelektrolytmaterial (hier als "Elektrolytmaterialschicht" bezeichnet) umfasst, ausgewählt aus:
∘ Li₁₊ₓMₓ(Sc)₂₋ₓ(PO₄)₃ mit M = Al, Y, Ga oder einem Gemisch der drei Verbindungen und 0 ≤ x ≤ 0,8; oder
∘ Li₁₊ₓMₓ(Ga_{1-y}Sc_{y})₂₋ₓ(PO₄)₃ mit 0 ≤ x ≤ 0.8; 0 ≤ y ≤ 1 und M = Al oder Y, oder einem Gemisch der zwei Verbindungen;
∘ Li₁₊ₓMₓ(Ga)₂₋ₓ(PO₄)₃ mit M = Al, Y, oder einem Gemisch der zwei Verbindungen und 0 ≤ x ≤ 0.8; oder
∘ Li_{3+y}(Sc₂₋ₓMₓ)Q_{y}P_{3-y}O₁₂, mit M = Al und/oder Y und Q = Si und/oder Se, 0 ≤ x ≤ 0,8 und 0 < y ≤ 1; Li_{3+y}(Sc₂₋ₓMₓ)Q_{y}P₃-_{y}O₁₂, mit M = Al und Y und Q = Si und/oder Se, 0 ≤ x ≤ 0,8 und 0 ≤ y ≤ 1; oder
∘ Li_{1+x+y}MₓSc₂₋ₓQ_{y}P_{3-y}O₁₂, mit M = Al, Y, Ga oder einem Gemisch der drei Verbindungen und Q = Si und/oder Se, 0 ≤ x ≤ 0,8 und 0 ≤ y ≤ 1; oder
∘ Li_{1+x+y+z}Mₓ(Ga_{1-y}Sc_{y})₂₋ₓQ_{z}P_{3-z}O₁₂ mit 0 ≤ x ≤ 0,8; 0 ≤ y ≤ 1; 0 ≤ z ≤ 0,6 mit M = Al oder Y oder einem Gemisch der zwei Verbindungen und Q = Si und/oder Se;
∘ Li₁₊ₓNₓM₂₋ₓP₃O₁₂, mit 0 ≤ x ≤ 1 und N = Cr und/oder V, M = Sc, Sn, Zr, Se oder Si, oder einem Gemisch dieser Verbindungen;
d) Stapeln, nacheinander, Fläche auf Fläche:
o entweder einer Schicht, die mindestens ein Anodenmaterial umfasst, das mit einer Schicht beschichtet ist, die mindestens ein in Schritt c) erhaltenes Elektrolytmaterial umfasst, mit einer Schicht, die mindestens ein Kathodenmaterial umfasst, das mit einer Schicht beschichtet ist, die mindestens ein in Schritt c) erhaltenes Elektrolytmaterial umfasst;
o oder einer Schicht, die mindestens ein Kathodenmaterial umfasst, das mit einer Schicht beschichtet ist, die mindestens ein in Schritt c) erhaltenes Elektrolytmaterial umfasst, mit einer Schicht, die mindestens ein Anodenmaterial umfasst, das mit einer Schicht aus Elektrolytmaterial beschichtet ist oder nicht, die ein in Schritt c) erhalten wurde;
e) Ausführung einer Wärmebehandlung und/oder einer mechanischen Kompression des in Schritt d) erhaltenen Stapels, um eine Ganzfestkörperbatterie mit Dünnschichten zu erhalten,
f) optionale Ausführung eines Schrittes der Verkapselung der in Schritt e) erhaltenen Batterie, durch Abscheidung von mindestens einer Verkapselungsschicht aus keramischem, glasartigem oder glaskeramischem Material, vorzugsweise durch chemische Gasphasenabscheidung (CVD), insbesondere plasmagestützt (PECVD), oder durch chemische Gasphasenabscheidung mit Plasmastrahl (PSCVD).

2. Verfahren nach Anspruch 1, **dadurch gekennzeichnet, dass** beim Aufbringen einer Elektrolytmaterialschicht auf die in Schritt a) erhaltene Schicht auf die in Schritt b) erhaltene Schicht eine Schicht aus mindestens einem Material aufgebracht wird, ausgewählt aus:
∘ Li₃(Sc₂₋ₓMₓ)(PO₄)₃ mit M = Al oder Y und 0 ≤ x ≤ 1; oder
∘ Li₁₊ₓMₓ(Sc)₂₋ₓ(PO₄)₃ mit M = Al, Y, Ga oder einem Gemisch der zwei oder drei Verbindungen und 0 ≤ x ≤ 0,8; oder
∘ Li₁₊ₓMₓ(Ga_{1-y}SC_{y})₂₋ₓ(PO₄)₃ mit 0 ≤ x ≤ 0,8; 0 ≤ y ≤ 1 und M = Al oder Y, oder einem Gemisch der zwei Verbindungen; oder
∘ Li₁₊ₓAlₓTi₂₋ₓ(PO₄)₃ mit 0 ≤ x ≤ 1; oder
∘ Li₁₊ₓAlₓGe₂₋ₓ(PO₄)₃ mit 0 ≤ x ≤ 1; oder
∘ Li_{1+x+z}Mₓ(Ge_{1-y}Ti_{y})₂₋ₓSi_{z}P_{3-z}O₁₂ mit 0 ≤ x ≤ 0,8; 0 ≤ y ≤ 1; 0 ≤ z ≤ 0,6 und M = Al, Ga oder Y oder einem Gemisch der zwei oder drei dieser Verbindungen; oder
∘ Li_{3+y}(Sc₂₋ₓMₓ)Q_{y}P_{3-y}O₁₂, mit M = Al und/oder Y und Q = Si und/oder Se, 0 ≤ x ≤ 0,8 und 0 ≤ y ≤ 1; oder
∘ Li_{1+x+y}MₓSc₂₋ₓQ_{y}P_{3-y}O₁₂, mit M = Al, Y, Ga oder einem Gemisch der drei Verbindungen und Q = Si und/oder Se, 0 ≤ x ≤ 0,8 und 0 ≤ y ≤ 1; oder
∘ Li_{1+x+y+z}Mₓ(Ga_{1-y}Sc_{y})₂₋ₓQ_{z}P_{3-z}O₁₂ mit 0 ≤ x ≤ 0,8; 0 ≤ y ≤ 1; 0 ≤ z ≤ 0,6 mit M = Al oder Y oder einem Gemisch der zwei Verbindungen und Q = Si und/oder Se;
∘ Li₁₊ₓNₓM₂₋ₓP₃O₁₂, mit 0 ≤ x ≤ 1 und N = Cr und/oder V, M = Sc, Sn, Zr, Hf, Se oder Si, oder einem Gemisch dieser Verbindungen.

3. Verfahren nach Anspruch 1 oder 2, **dadurch gekennzeichnet, dass** die Schichten der Anoden, Kathoden und Festelektrolyten mit mindestens einer der folgenden Techniken aufgebracht werden:
(i) physikalische Gasphasenabscheidung (PVD), und insbesondere durch Vakuumverdampfung, Laserablation, Ionenstrahl, Kathodenzerstäubung;
(ii) chemische Gasphasenabscheidung (CVD), und insbesondere plasmagestützt (PECVD), lasergestützt (LACVD) oder aerosolgestützt (AA-CVD);
(iii) Elektrozerstäubung;
(iv) Elektrophorese;
(v) Aerosolabscheidung;
(vi) Sol-Gel;
(vii) Tauchen, insbesondere durch Tauchbeschichtung (dip-coating), Rotationsbeschichtung (spin-coating) oder durch das Langmuir-Blodgett-Verfahren;
und vorzugsweise hergestellt werden durch eine Abscheidung von Nanopartikeln beziehungsweise von Anoden-, Kathoden- oder Elektrolytmaterial durch mindestens eine der folgenden Techniken: Elektrozerstäubung, Elektrophorese, Aerosolabscheidung, Tauchen, und noch bevorzugter sind alle durch Elektrophorese aufgebracht, vorzugsweise aus Nanopartikeln.

4. Verfahren nach einem der Ansprüche 1 bis 3, **dadurch gekennzeichnet, dass** die Schichten aus Anoden- und/oder Kathodenmaterial ferner elektronisch leitfähige Materialien umfassen, und insbesondere Graphit, und/oder Nanopartikel aus Materialien, die für Lithium-Ionen leitfähig sind, des Typs, wie sie zur Herstellung der Elektrolytfilmen verwendet werden, oder feste vernetzte Polymermaterialien, die Ionengruppierungen beinhalten.

5. Verfahren nach einem der Ansprüche 1 bis 4, **dadurch gekennzeichnet, dass**
- die Anodenmaterialschicht a) aus Material hergestellt wird, ausgewählt aus:
(i) Zinnoxynitriden der typischen Formel SnOₓN_{y};
(ii) Lithium-Eisen-Phosphat der typischen Formel LiFePO₄;
(iii) gemischten Oxynitriden aus Silizium und Zinn der typischen Formel SiₐSn_{b}O_{y}N_{z} mit a>0, b>0, a+b≤2, 0<y≤4, 0<z≤3, und besonders SiSn_{0,87}O_{1,2}N_{1,72}; sowie die Oxynitride in der Form SiₐSn_{b}C_{c}O_{y}N_{z} mit a>0, b>0, a+b≤2, 0<c<10, 0<y<24, 0<z<17; SiₐSn_{b}C_{c}O_{y}N_{z}Xₙ mit Xₙ mindestens einem der Elemente aus F, Cl, Br, l, S, Se, Te, P, As, Sb, Bi, Ge, Pb und a>0, b>0, a+b>0, a+b≤2, 0<c<10, 0<y<24 und 0<z<17; und SiₐSn_{b}O_{y}N_{z}Xₙ mit Xₙ mindestens einem der Elemente aus F, Cl, Br, l, S, Se, Te, P, As, Sb, Bi, Ge, Pb und a>0, b>0, a+b≤2, 0<y≤4 und 0<z≤3;
(iv) Nitriden vom Typ SiₓN_{y}, besonders mit x = 3 und y = 4; SnₓN_{y}, besonders mit x = 3 und y = 4; ZnₓN_{y}, besonders mit x = 3 und y = 4; Li₃₋ₓMₓN mit M = Co, Ni, Cu;
(v) Oxiden SnO₂, Li₄Ti₅O₁₂, SnB_{0,6}P_{0,4}O_{2,9} und TiO₂;
und/oder dass:
- die Kathodenmaterialschicht b) aus Kathodenmaterial hergestellt ist, ausgewählt aus:
∘ Oxiden LiMn₂O₄, LiCoCO₂, LiNiO₂, LiMn_{1,5}Ni_{0,5}O₄, LiMn_{1,5}Ni_{0,5-x}XₓO₄ (wobei X ausgewählt wird aus Al, Fe, Cr, Co, Rh, Nd, anderen Metallen der Seltenen Erden, und wobei 0 < x < 0,1), LiFeO₂, LiMn_{1/3}Ni_{1/3}CO_{1/3}CO₄;
o Phosphaten LiFePO₄, LiMnPO₄, LiCoPO₄, LiNiPO₄, Li₃V₂(PO₄)₃; Phosphate der Formel LiMM'PO₄, mit M und M' (M ≠ M') ausgewählt aus Fe, Mn, Ni, Co, V;
o allen lithiierten Formen der folgenden Chalkogenide: V₂O₅, V₃O₈, TiS₂, Titanoxysulfide TiO_{y}S_{z}, Wolframoxysulfide WO_{y}S_{z}, CuS, CuS₂.

6. Verfahren nach einem der Ansprüche 1 bis 5, **dadurch gekennzeichnet, dass** der Schritt e) der Wärmebehandlung bei einer Temperatur zwischen 200 °C und 1000 °C durchgeführt wird, vorzugsweise zwischen 300 °C und 700 °C und noch bevorzugter zwischen 300 °C und 500 °C und/oder die mechanische Kompression bei einem Druck zwischen 10 und 400 MPa durchgeführt wird, vorzugsweise zwischen 20 und 100 MPa.

7. Verfahren nach einem der Ansprüche 1 bis 6, **dadurch gekennzeichnet, dass** mindestens zwei Flächen der nach Schritt f) erhaltenen Batterie zugeschnitten werden, um nur Kathodenabschnitte auf der ersten Schnittebene erscheinen zu lassen und nur Anodenabschnitte auf der zweiten Schnittebene.

8. Verfahren nach Anspruch 7, **dadurch gekennzeichnet, dass** anodische und kathodische Endungen durch Metallisieren der zugeschnittenen Abschnitte hergestellt werden, vorzugsweise durch Abscheidung einer Zinnschicht, gegebenenfalls auf einer Unterschicht aus Nickel aufgebracht und/oder aus Epoxidharz, das mit Metallpartikeln beladen ist.

9. Verfahren nach einem der Ansprüche 1 bis 8, **dadurch gekennzeichnet, dass** eine Wärmebehandlung bei einer Temperatur zwischen 300 °C und 1000 °C durchgeführt wird, vorzugsweise zwischen 400 °C und 800 °C und noch bevorzugter zwischen 500 °C und 700 °C, zum Rekristallisieren der Anoden- und/oder Kathodenmaterialien, wobei die Wärmebehandlung nach Schritt a) und/oder b) durchgeführt wird, aber vor Schritt c) der Abscheidung der Elektrolytschicht.

10. Verfahren nach einem der Ansprüche 3 bis 9, **dadurch gekennzeichnet, dass** die Größe der Nanopartikel von Elektrolytmaterialien kleiner als 100 nm ist, vorzugsweise kleiner als 30 nm, wenn die Schichten der Anoden und/oder Kathoden und/oder Elektrolyten durch eine Abscheidung von Nanopartikeln beziehungsweise von Anoden-, Kathoden- oder Elektrolytmaterial durch mindestens eine der folgenden Techniken hergestellt werden: Elektrozerstäubung, Elektrophorese, Aerosolabscheidung, Tauchen.

11. Verfahren nach einem der Ansprüche 1 bis 10, **dadurch gekennzeichnet, dass** die leitfähigen Substrate aus Aluminium, aus Kupfer, aus Edelstahl oder aus Nickel sind, vorzugsweise aus Nickel, und gegebenenfalls mit einem Edelmetall beschichtet, das aus den folgenden Metallen ausgewählt wird: Gold, Platin, Palladium, Vanadium, Kobalt, Nickel, Mangan, Niob, Tantal, Chrom, Molybdän, Titan, Palladium, Zirkonium, Wolfram oder einer Legierung, die mindestens eines dieser Metalle umfasst.

12. Ganzfestkörperbatterie mit Dünnschichten, die durch das Verfahren nach einem der Ansprüche 1 bis 11 erhalten werden kann, vorzugsweise eine flächenbezogene Kapazität der Kathode aufweisend, die größer oder gleich der flächenbezogenen Kapazität der Anode ist.

13. Batterie nach Anspruch 12, **dadurch gekennzeichnet, dass** der Stapel der Kathoden- und Anodenschichten seitlich versetzt ist.

14. Batterie nach einem der Ansprüche 12 oder 13, **dadurch gekennzeichnet, dass** sie mindestens eine Verkapselungsschicht umfasst, vorzugsweise eine Keramik-, Glas- oder Glaskeramikschicht, und vorzugsweise eine zweite Verkapselungsschicht, die auf der ersten Verkapselungsschicht aufgebracht ist, wobei die zweite Verkapselungsschicht vorzugsweise aus Silikon ist.

15. Batterie nach Anspruch 14, **dadurch gekennzeichnet, dass** die mindestens eine Verkapselungsschicht vier der sechs Flächen der Batterie vollständig bedeckt und teilweise die zwei verbleibenden Flächen, die unter den Metallisierungen liegen, die für die Verbindungstechnik der Batterie dienen.

16. Batterie nach einem der Ansprüche 12 bis 15, **dadurch gekennzeichnet, dass** sie Endungen im Bereich umfasst, wo die Kathoden- beziehungsweise Anodenstromkollektoren sichtbar sind, wobei die Anodenverbinder und die Kathodenverbinder vorzugsweise auf gegenüberliegenden Seiten des Stapels liegen.

17. Batterie nach einem der Ansprüche 12 bis 16, **dadurch gekennzeichnet, dass** sie vollkommen anorganisch ist.

## Claims

1. A method for manufacturing an all-solid thin-film battery comprising the following successive steps:
a) depositing a layer comprising at least one anode material (herein called "anode material layer") over its conductive substrate, preferably selected from the group formed by a metal sheet, a metal strip, a metallised insulating sheet, a metallised insulating strip, a metallised insulating film, said conductive substrates, or their conductive elements, being able to serve as an anodic current collector;
b) depositing a layer comprising at least one cathode material (herein called "cathode material layer") over its conductive substrate, preferably selected from the group formed by a metal sheet, a metal strip, a metallised insulating sheet, a metallised insulating strip, a metallised insulating film, said conductive substrates, or their conductive elements, being able to serve as a cathodic current collector, bearing in mind that steps a) and b) could be reversed;
c) depositing over the layer obtained at step a) and/or b) a layer comprising at least one solid electrolyte material (herein called "electrolyte material layer"), selected from among:
∘ Li₁₊ₓMₓ(Sc)₂₋ₓ(PO₄)₃ with M = Al, Y, Ga or a mixture of the three compounds and 0≤x≤0.8; or
∘ Li₁₊ₓMₓ(Ga_{1-y}Sc_{y})₂₋ₓ(PO₄)₃ with 0≤x≤0.8; 0≤y≤1 and M = Al or Y; or a mixture of the two compounds;
∘ Li₁₊ₓMₓ(Ga)₂₋ₓ(PO₄)₃ with M = Al, Y; or a mixture of the two compounds and 0≤x≤0.8; or
∘ Li_{3+y}(Sc₂₋ₓMₓ)Q_{y}P_{3-y}O₁₂, with M = Al and/or Y and Q = Si and/or Se, 0≤x≤0.8 and 0<y≤1; Li_{3+y}(Sc₂₋ₓMₓ)Q_{y}P_{3-y}O₁₂, with M = Al and Y and Q = Si and/or Se, 0≤x≤0.8 and 0≤y≤1; or
∘ Li_{1+x+y}MₓSc₂₋ₓQ_{y}P_{3-y}O₁₂ with M = Al, Y, Ga or a mixture of the three compounds, and Q = Si and/or Se, 0≤x≤0.8 and 0≤y≤1; or
∘ Li_{1+x+y+z}Mₓ(Ga_{1-y}Sc_{y})₂₋ₓQ_{z}P_{3-z}O₁₂ with 0≤x≤0.8; 0≤y≤1; 0≤z≤0.6 with M = Al or Y or a mixture of the two compounds and Q = Si and/or Se;
∘ Li₁₊ₓNₓM₂₋ₓP₃O₁₂, with 0≤x≤1 and N = Cr and/or V, M = Sc, Sn, Zr, Hf, Se or Si, or a mixture of these compounds;
d) stacking successively, face over face:
o either a layer comprising at least one anode material coated with a layer comprising at least one electrolyte material obtained at step c) with a layer comprising at least one cathode material coated with a layer comprising at least one electrolyte material obtained at step c);
o or a layer comprising at least one cathode material coated with a layer comprising at least one electrolyte material obtained at step c), with a layer comprising at least one anode material coated or not with an electrolyte material layer obtained at step c);
e) performing a heat treatment and/or a mechanical compression of the stack obtained at step d) to obtain an all-solid thin-film battery,
f) optionally, performing a step of encapsulating the battery obtained at step e) by deposition of at least one encapsulation layer of ceramic, vitreous or vitroceramic, preferably, by chemical vapour deposition (CVD), and more particularly plasma-assisted (PECVD), or by plasma jet chemical vapour deposition (PSCVD).

2. The method according to claim 1, **characterised in that** when depositing an electrolyte material layer over the layer obtained at step a), is deposited over the layer obtained at step b) a layer of at least one material selected from among:
∘ Li₃(Sc₂₋ₓMₓ)(PO₄)₃ with M = Al or Y and 0 ≤ x ≤1; or
∘ Li₁₊ₓMₓ(Sc)₂₋ₓ(PO₄)₃ with M = Al, Y, Ga or a mixture of two or three of the compounds and 0 ≤ x ≤ 0.8; or
∘ Li₁₊ₓMₓ(Ga_{1-y}Sc_{y})₂₋ₓ(PO₄)₃ with 0≤x≤0.8; 0≤y≤1 and M = Al or Y, or a mixture of the two compounds; or
∘ Li₁₊ₓAlₓTi₂₋ₓ(PO₄)₃ with 0≤x≤1, or
∘ Li₁₊ₓAlₓGe₂₋ₓ(PO₄)₃ with 0≤x≤1; or
∘ Li_{1+x+z}Mₓ(Ge_{1-y}Ti_{y})₂₋ₓSi₂P_{3-z}O₁₂ with 0≤x≤0.8; 0≤y≤1; 0≤z≤0.6 and M = Al, Ga or Y or a mixture of two or three of these compounds; or
∘ Li_{3+y}(Sc₂₋ₓMₓ)Q_{y}P_{3-y}O₁₂, with M = Al and/or Y and Q = Si and/or Se, 0≤x≤0.8 and 0≤y≤1; or
∘ Li_{1+x+y}MₓSc₂₋ₓQ_{y}P_{3-y}O₁₂, with M = Al, Y, Ga or a mixture of the three compounds and Q = Si and/or Se, 0≤x≤0.8 and 0≤y≤1; or
∘ Li_{1+x+y+z}Mₓ(Ga_{1-y}Sc_{y})₂₋ₓQ_{z}P_{3-z}O₁₂ with 0≤x≤0.8; 0≤y≤1; 0≤z≤0.6 with M = Al or Y or a mixture of the two compounds and Q = Si and/or Se;
∘ Li₁₊ₓNₓM₂₋ₓP₃O₁₂, with 0≤x≤1 and N = Cr and/or V, M = Sc, Sn, Zr, Hf, Se or Si, or a mixture of these compounds.

3. The method according to claim 1 or 2, **characterised in that** the anode, cathode, and solid electrolyte layers are deposited according to at least one of the following techniques:
(i) physical vapour deposition (PVD), and more particularly by vacuum evaporation, by laser ablation, by ion beam, by cathode sputtering;
(ii) chemical vapour deposition (CVD), and more particularly plasma-assisted (PECVD), laser-assisted (LACVD), or aerosol-assisted (AA-CVD);
(iii) electrospray;
(iv) electrophoresis;
(v) aerosol deposition;
(vi) sol-gel;
(vii) dipping, more particularly by dip-coating, spin-coating, or by the Langmuir-Blodgett process,
and are preferably made by a deposition of nanoparticles of respectively anode, cathode or electrolyte material from among at least one of the following techniques: electrospray, electrophoresis, aerosol deposition, dipping, and are even more preferably all deposited by electrophoresis, preferably from nanoparticles.

4. The method according to any one of claims 1 to 3, **characterised in that** the anode and/or cathode material layers further comprise electronically-conductive materials, and in particular graphite, and/or nanoparticles of materials conducting lithium ions, of the type as those used to make electrolyte films or crosslinked solid polymer materials including ionic groups.

5. The method according to any one of claims 1 to 4, **characterised in that**:
- the anode material layer a) is made from a material selected from among:
(i) tin oxynitrides of the typical formula SnOₓN_{y};
(ii) lithiated iron phosphate of the typical formula LiFePO₄;
(iii) mixed silicon and tin oxynitrides of the typical formula SiₐSn_{b}O_{y}N_{z} with a>0, b>0, a+b≤2, 0y≤4, 0<z≤3, and in particular SiSn_{0.87}O_{1.2}N_{1.72}, as well as oxynitrides in the form SiₐSn_{b}C_{c}O_{y}N_{z} with a>0, b>0, a+b≤2, 0<c<10, 0<y<24, 0<z<17; SiₐSn_{b}C_{c}O_{y}N_{z}Xₙ with Xₙ at least one of the elements from among F, Cl, Br, I, S, Se, Te, P, As, Sb, Bi, Ge, Pb and a>0, b>0, a+b>0, a+b≤2, 0<c<10, 0<y<24 and 0<z<17; and SiₐSn_{b}O_{y}N_{z}Xₙ with Xₙ at least one of the elements from among F, Cl, Br, I, S, Se, Te, P, As, Sb, Bi, Ge, Pb and a>0, b>0, a+b≤2, 0<y≤4 and 0<z≤3;
(iv) nitrides of the type SiₓN_{y}, in particular with x=3 and y=4; SnₓN_{y}, in particular with x=3 and y=4; ZnₓN_{y}, in particular with x=3 and y=4; Li₃₋ₓMₓN with M = Co, Ni, Cu;
(v) oxides SnO₂, Li₄Ti₅O₁₂, SnB_{0.6}P_{0.4}O_{2.9} and TiO₂,
and/or **in that**:
- the cathode material layer b) is made from a material selected from among:
o oxides LiMn₂O₄, LiCoO₂, LiNiO₂, LiMn_{1.5}Ni_{0.5}O₄, LiMn_{1.5}Ni_{0.5-x}XₓO₄ (where X is selected from among Al, Fe, Cr, Co, Rh, Nd, other rare earth elements, and where 0<x<0.1), LiFeO₂, LiMn_{1/3}Ni_{1/3}CO_{1/3}O₄;
o phosphates LiFePO₄, LiMnPO₄, LiCoPO₄, LiNiPO₄, Li₃V₂(PO₄)₃; phosphates of formula LiMM'PO₄, with M and M' (M≠M') selected from among Fe, Mn, Ni, Co, V;
o all lithiated forms of the following chalcogenides: V₂O₅, V₃O₈, TiS₂, titanium oxysulfides TiO_{y}S_{z}, tungsten oxysulfides WO_{y}S_{z}, CuS, CuS₂.

6. The method according to any one of claims 1 to 5, **characterised in that** the heat treatment step e) is carried out at a temperature comprised between 200°C and 1,000°C, preferably between 300°C and 700°C, and even more preferably between 300°C and 500°C, and/or the mechanical compression is carried out at a pressure comprised between 10 and 400 MPa, preferably between 20 and 100 MPa.

7. The method according to any one of claims 1 to 6, **characterised in that** at least two faces of the battery obtained after step f) are cut to expose only cathode sections on the first cutting plane and only anode sections on the second cutting plane.

8. The method according to claim 7, **characterised in that** anodic and cathodic terminations are made by metallisation of the cut sections, preferably by deposition of a layer of tin, possibly deposited over an underlayer of nickel and/or epoxy resin charged with metallic particles.

9. The method according to any one of claims 1 to 8, **characterised in that** a heat treatment is carried out at a temperature comprised between 300°C and 1,000°C, preferably between 400°C and 800°C, and even more preferably between 500°C and 700°C to recrystallise the anode and/or cathode materials, said heat treatment being carried out after step a) and/or b) but before step c) of depositing the electrolyte layer.

10. The method according to any one of claims 3 to 9, **characterised in that** the size of the nanoparticles of electrolyte materials is smaller than 100 nm, preferably smaller than 30 nm, when the anode and/or cathode and/or electrolyte layers are made by a deposition of nanoparticles of respectively anode, cathode or electrolyte material from among at least one of the following techniques: electrospray, electrophoresis, aerosol deposition, dipping.

11. The method according to any one of claims 1 to 10, **characterised in that** the conductive substrates are made of aluminium, copper, stainless steel, or nickel, preferably nickel, and possibly coated with a noble metal selected from among the following metals: gold, platinum, palladium, vanadium, cobalt, nickel, manganese, niobium, tantalum, chromium, molybdenum, titanium, palladium, zirconium, tungsten or any alloy comprising at least one of these metals.

12. An all-solid thin-film battery which could be obtained by the method according to any one of claims 1 to 11, preferably having a surface capacity of the cathode higher than or equal to the surface capacity of the anode.

13. The battery according to claim 12, **characterised in that** the stack of the cathode and anode layers is offset laterally.

14. The battery according to any one of claims 12 or 13, **characterised in that** it comprises at least one encapsulation layer, preferably a layer made of ceramic, glass or vitroceramic, and preferably a second encapsulation layer deposited over said first encapsulation layer, said second encapsulation layer being preferably made of silicone.

15. The battery according to claim 14, **characterised in that** said at least one encapsulation layer entirely covers four of the six faces of said battery and partially covers two remaining faces, located beneath the metallisations intended for the connection of the battery.

16. The battery according to any one of claims 12 to 15, **characterised in that** it comprises terminals where the cathode, respectively anode, current collectors are exposed, the anode connections and the cathode connections being preferably located on the opposite sides of the stack.

17. The battery according to any one of claims 12 to 16, **characterised in that** it is entirely inorganic.
